# EUROPÄISCHE PATENTANMELDUNG

(11) **EP 1 132 523 A2**
(43) Veröffentlichungstag der Anmeldung: **12.09.2001**
(21) Anmeldenummer: 01250063.3
(22) Anmeldetag: 28.02.2001
(51) Int. Cl.: E01F 9/011

(54) **Magazineinrichtung für ortsveränderliche Verkehrsschilder auf Strassenfahrzeugen**

(30) Priorität: 09.03.2000 DE 10013361
(71) Anmelder: Berliner Wasserbetriebe Anstalt des öffentlichen Rechts, 10179 Berlin (DE); Müller Umwelttechnik GmbH & Co. KG, 32816 Schieder-Schwalenberg (DE)
(72) Erfinder: Jözwiak, Wolfgang, Dipl.-Ing., 12209 Berlin (DE); Lenzdorf, Johannes, Dipl.-Ing., 32816 Schieder-Schwalenberg (DE); Pritzel, Manfred, Dipl.-Ing., 12107 Berlin (DE)

(57) **Zusammenfassung**

Die Erfindung betrifft eine Magazineinrichtung für ortsveränderliche Verkehrsschilder, bestehend aus einem Verkehrszeichen, einem Schaftrohr und einem Fußplattenständer, die fest mit einem Straßenfahrzeug, beispielsweise einer Zugmaschine mit Sattelzugkupplung und einem Aufliegeranhänger, verbunden ist und beim Be- und Entladen des Straßenfahrzeuges mit Verkehrsschildern eingesetzt wird.

Aufgabe der Erfindung ist es, eine Einrichtung zu schaffen, die eine größere Anzahl ortsveränderlicher Verkehrsschilder, bestehend aus Verkehrszeichen mit Schaftrohren und Fußplattenständern, auf einem Straßenfahrzeug platzsparend und statisch ausgewogen magaziniert und ein leichtes Be- und Entladen des Straßenfahrzeuge gewährleistet.

Erfindungsgemäß wird die Aufgabe dadurch gelöst, dass ein Magazin (3) oder mehrere für die Fußplattenständer (4) und ein Magazin für die vormontierten Verkehrszeichen (9) mit Schaftrohren (10) angeordnet sind, und das Magazin (3) für die Fußplattenständer (4) aus einem Senkrechtförderer (6) und einem unterhalb des Magazins angeordneten Endlosbandförderer (2), und das Magazin für die Verkehrszeichen (9) mit Schaftrohren (10) aus einem weiteren Endlosbandförderer (11), der mit Aufnahmen (12) für die Schaftrohrenden (13) und Klemmvorrichtungen (14) unterhalb der vormontierten Verkehrszeichen (9) mit Schaftrohren (10) versehen ist, besteht.

## Beschreibung

Die Erfindung betrifft eine Magazineinrichtung für ortsveränderliche Verkehrsschilder, bestehend aus einem Verkehrszeichen, einem Schaftrohr und einem Fußplattenständer, die fest mit einem Straßenfahrzeug, beispielsweise einer Zugmaschine mit Sattelzugkupplung und einem Aufliegeranhänger, verbunden ist und beim Be- und Entladen des Straßenfahrzeuges mit Verkehrsschildern eingesetzt wird.

Für das Aufstellen und Einsammeln von Straßenschildern mit Fußplattenständern werden über längere Wege Straßenfahrzeuge eingesetzt.

So sind nach der DE 25 05 860 ein Straßenfahrzeug mit geschlossenem Kofferaufbau, der mit Fächern versehen ist und nach der DE 19 03 855 ein Anhänger zur Lagerung und zum Transport von zeitweise aufzustellenden Straßenverkehrsschildern, der in einem vorgegebenen Rahmen mit Gleitschienen ausgestattet ist, bekannt.

Beide Einrichtungen beschreiben ein Regalsystem, das durch Herausnehmen oder -ziehen den Zugriff der Verkehrsschilder gewährleistet. Die zum Aufstellen benötigten Fußplattenständer werden nicht berücksichtigt.

Des weiteren ist nach der DE 198 10 769 ein Straßenfahrzeug zum Transport und Magazinieren von Verkehrsschildern bekannt, das aus einer Zugmaschine mit Sattelzugkupplung und einem Aufliegeranhänger besteht. Auf diesem Aufliegeranhänger ist eine Magazineinrichtung für Fußplattenständer und Verkehrsschilder mit Schaftrohren angeordnet. Die Magazineinrichtung besteht aus einer Endloszugkette, auf der die Fußplattenständer, die sich in Aufnahmeeinrichtungen befinden, horizontal zum Be- und Entladen bewegt werden.

Nachteilig hierbei ist, dass durch die eingehängten Fußplattenständer während des Transportes Bewegungen entstehen, die durch die vorhandenen Konstruktionen nicht ausgeglichen werden.

Aufgabe der Erfindung ist es, eine Einrichtung zu schaffen, die eine größere Anzahl ortsveränderlicher Verkehrsschilder, bestehend aus Verkehrszeichen mit Schaftrohren und Fußplattenständern, auf einem Straßenfahrzeug platzsparend und statisch ausgewogen magaziniert und ein leichtes Be- und Entladen des Straßenfahrzeuges gewährleistet.

Erfindungsgemäß wird die Aufgabe dadurch gelöst, dass auf dem Straßenfahrzeug jeweils ein Magazin oder mehrere für die Fußplattenständer und für die mit Schaftrohren vormontierten Verkehrszeichen angeordnet sind.

Das Magazin für die Fußplattenständer besteht aus einem motorisch angetriebenen Senkrechtförderer in Form von zwei seitlich am Ständerwerk angeordneten, umlaufenden Ketten mit Aufnahmewinkeln für die Fußplattenständer, und einem unterhalb des Magazins angeordneten, ebenfalls motorisch angetriebenen, Endlosbandförderer. Durch den Antrieb werden die Fußplattenständer auf- und abwärts und weiter durch den Endlosbandförderer waagerecht zur rückwärtigen Bordwand des Straßenfahrzeuges bewegt. Die Anzahl der Magazine ist von der Länge des Straßenfahrzeuges abhängig.

Das Magazin für die Verkehrszeichen mit Schaftrohren besteht auch aus einem Endlosbandförderer, das mit Aufnahmen für die Schaftrohrenden und mit Klemmvorrichtungen für die Schaftrohre unterhalb der vormontierten Verkehrszeichen versehen ist, der diese zur rückwärtigen Bordwand des Straßenfahrzeuges und somit zur Entnahmeposition transportiert.

Der Antrieb des Senkrechtförderes und der Endlosbandförderer erfolgt hydraulisch, pneumatisch, elektrisch oder in Kombination dieser Antriebsarten.

Die Vorteile der Erfindung sind der sichere, statisch ausgewogene Transport, sowie das rationellere und ergonomisch günstigere Be- und Entladen einer größeren Anzahl von Verkehrsschildern, insbesondere der schweren Fußplattenständer.

Die Erfindung soll nachstehend an einem Ausführungsbeispiel näher erläutert werden. Die zugehörigen Zeichnungen zeigen in
- Figur 1: die perspektivische Ansicht einer erfindungsgemäßen Magazineinrichtung
- Figur 2: die Vorderansicht eines erfindungsgemäßen Magazins für die Fußplattenständer
- Figur 3: die Seitenansicht eines erfindungsgemäßen Magazins für die Fußplattenständer
- Figur 4: die Draufsicht eines erfindungsgemäßen Magazins für die Fußplattenständer
- Figur 5: eines erfindungsgemäßen Magazins für die Verkehrszeichen mit Schaftrohren.

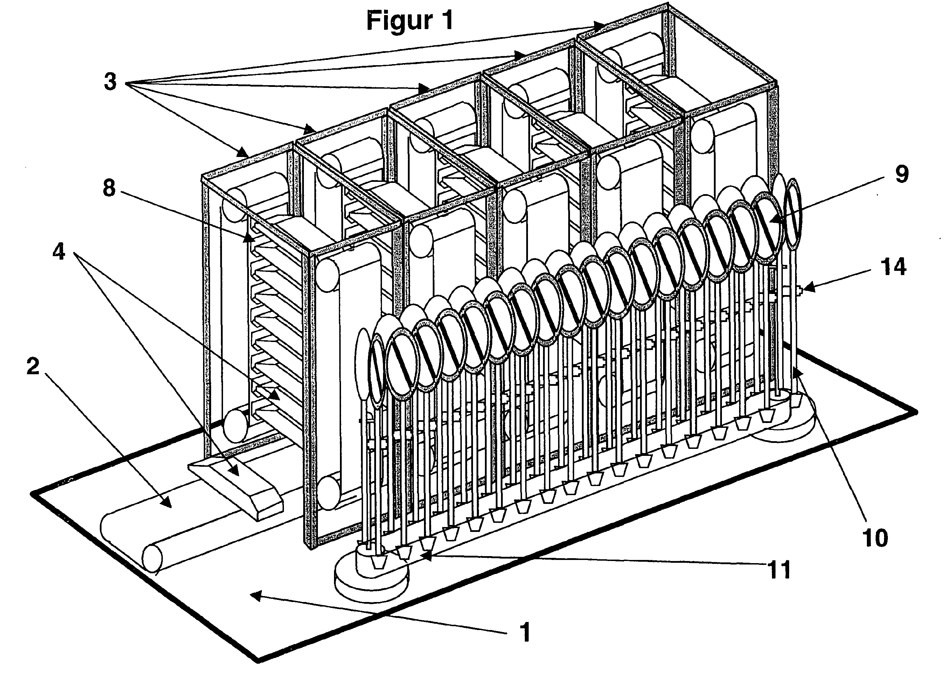

Das Fahrzeug, bestehend aus einer Zugmaschine mit Sattelzugkupplung und einem Aufliegeranhänger, auf der die erfindungsgemäße Magazineinrichtung (Figur 1), die aus Magazinen für Fußplattenständer und einem Magazin für Verkehrszeichen mit Schaftrohr besteht, angeordnet ist, auf einer Länge, die durch die Anzahl der Magazine bestimmt ist, befindet sich im beladenen Zustand am Einsatzort.

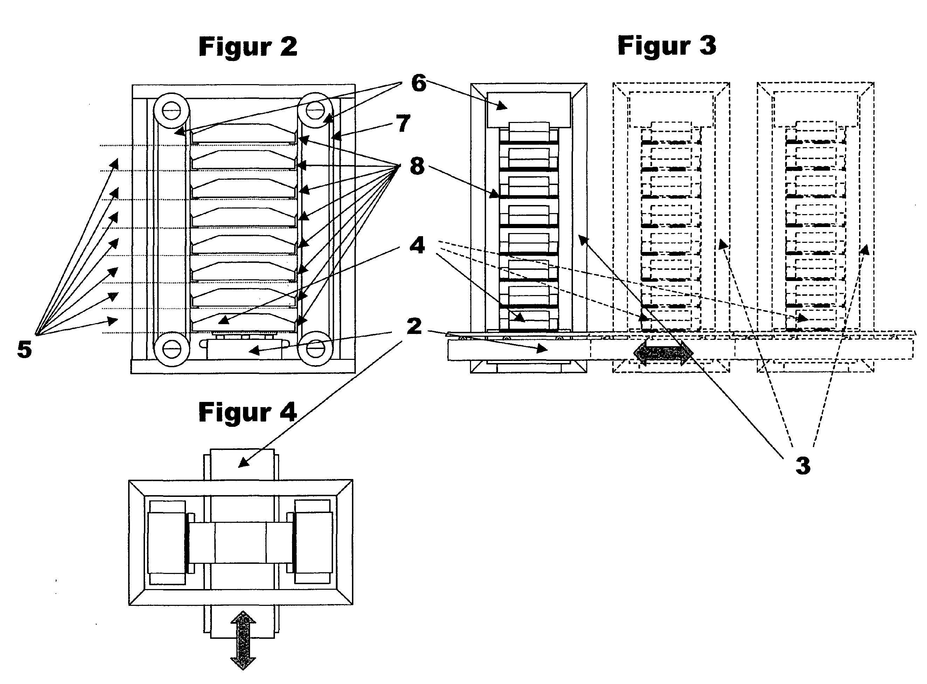

Über eine zu öffnende Heckklappe wird eine Transporteinrichtung, ein klappbares Förderband oder Manipulator, zur Überwindung des Höhenunterschiedes von der Ladefläche 1 zum Straßenniveau in Stellung gebracht. Mittels eines elektrischen Steuerschalters, dessen Tableau sich an der Ausladestelle befindet, wird ein weiterer Endlosbandförderer 2 unter den Magazinen 3 (Figuren 2 bis 4) Richtung Heckklappe in Bewegung gesetzt. Auf diesem Endlosbandförderer 2 befindet sich der unterste Fußplattenständer 4 aus dem ersten und /oder einem nachgeordneten Magazin 3. Der Endlosbandförderer 2 bewegt sich, gesteuert über einen Drucktaster am Bedienpult in Richtung Heckklappe, exakt bis zu der Stelle, an der die Fußplattenständer vom bereits zuvor ausgeklappten Förderband übernommen werden. Nachdem die Kombination dreier Lichtschranken erkannt hat, dass eine Lage 5 vollständig geleert ist, senkt der Senkrechtförderer 6 eine weitere Lage 5 auf den stehenden Endlosbandförderer 2 ab. Der Entladevorgang beginnt erneut. Der Senkrechtförderer 6 besteht aus einem elektrisch angetriebenen Spindelhubgetriebe, das Endlosketten 7 mit Aufnahmewinkeln 8 für die Fußplattenständer anhebt und absenkt. Werden später weitere Fußplattenständer benötigt, erfolgt die Leerung weiterer horizontaler Lagen 5, der auf dem Fahrzeug befindlichen Magazine 3.

Beim Beladen mit Fußplattenständern 4 erfolgt der Vorgang entgegengesetzt.

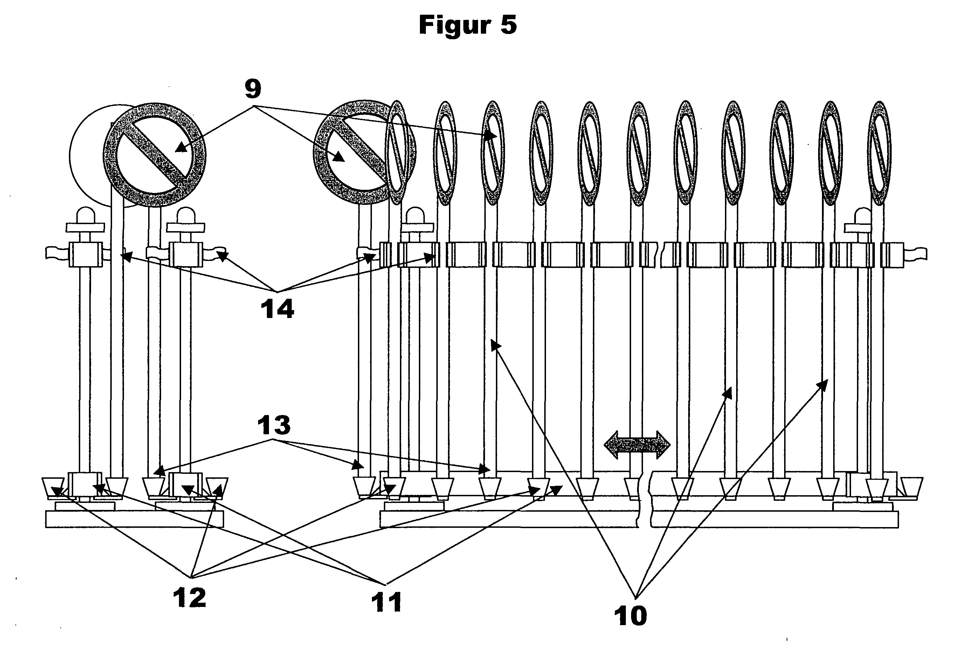

Das Magazin (Figur 5) für die Verkehrszeichen 9 mit Schaftrohren 10 ist in Form eines weiteren Endlosförderers 11, der über ein Pult von der Aufnahme- oder Abgabestelle aus bedient wird, über die gesamte Fahrzeuglänge angeordnet.

Das Magazin ist bestückt mit Aufnahmewinkeln 12 für die Schaftrohrenden 13 und

Klemmvorrichtungen 14 unterhalb der vormontierten Verkehrszeichen 9. Beim Beladen dieses Magazins werden die Verkehrszeichen 9 mit den Schaftrohren 10 in die aufnahmen 12 des Magazins gesteckt und im Bereich des oberen Schaftrohres 10 durch eine Klemmvorrichtung 14 festgehalten.

Der kraftbetriebene Antrieb bewegt die Endlosförderer 11 bis zur Aufnahme- oder Abgabestelle.

Beim Entnehmen der Verkehrszeichen 9 mit Schaftrohren 10 läuft der Prozess entgegengesetzt.

### Aufstellung der Bezugszeichen für die Patentanmeldung

### "Magazineinrichtung für ortsveränderliche Verkehrsschilder auf Straßenfahrzeugen"

- 1: Ladefläche
- 2: Endlosbandförderer für Fußplattenständer
- 3: Magazin
- 4: Fußplattenständer
- 5: Lage
- 6: Senkrechtförderer
- 7: Endlosketten
- 8: Aufnahmewinkel
- 9: Verkehrszeichen
- 10: Schaftrohre
- 11: Endlosbandförderer für Verkehrszeichen und Schaftrohre
- 12: Aufnahmen
- 13: Schaftrohrenden
- 14: Klemmvorrichtungen

## Patentansprüche

1. Magazineinrichtung für ortsveränderliche Verkehrsschilder, die aus einem Verkehrszeichen, einem Schaftrohr und einem Fußplattenständer bestehen, auf Straßenfahrzeugen,
**dadurch gekennzeichnet**, dass
ein Magazin (3) oder mehrere für die Fußplattenständer (4) und ein Magazin für die vormontierten Verkehrszeichen (9) mit Schaftrohren (10) angeordnet sind, und das Magazin (3) für die Fußplattenständer (4) aus einem Senkrechtförderer (6) und einem unterhalb des Magazins angeordneten Endlosbandförderer (2), und das Magazin für die Verkehrszeichen (9) mit Schaftrohren (10) aus einem weiteren Endlosbandförderer (11), der mit Aufnahmen (12) für die Schaftrohrenden (13) und Klemmvorrichtungen (14) unterhalb der vormontierten Verkehrszeichen (9) mit Schaftrohren (10) versehen ist, besteht.

2. Magazineinrichtung nach Anspruch 1,
**dadurch gekennzeichnet**, dass
der Senkrechtförderer (6) aus zwei seitlich am Ständerwerk angeordneten, umlaufenden Endlosketten (7) mit Aufnahmewinkeln (8) für die Fußplattenständer (4) besteht.

3. Magazineinrichtung nach den Ansprüchen 1 und 2,
**dadurch gekennzeichnet**, dass
die Anzahl der Magazine (3) für die Fußplattenständer (4) von der Länge des Straßenfahrzeuges abhängt.

4. Magazineinrichtung nach den Ansprüchen 1 bis 3,
**dadurch gekennzeichnet**, dass
der Antrieb des Senkrechtförderers (6) und der Endlosförderer (2; 11) hydraulisch, pneumatisch, elektrisch oder in Kombination dieser Antriebsarten erfolgt.
